# EUROPEAN PATENT APPLICATION

(11) **EP 4 836 339 A1**
(43) Date of publication of application: **04.11.2026**
(21) Application number: 24913664.9
(22) Date of filing: 27.12.2024
(51) Int. Cl.: H04L 5/00, H04W 72/232, H04L 1/08, H04W 72/0446, H04W 4/70, H04W 84/06

(54) **NARROWBAND-BASED COMMUNICATION METHOD AND APPARATUS**

(30) Priority: 29.12.2023 KR 20230197454; 09.01.2024 KR 20240003738; 07.08.2024 KR 20240105623
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Plasseraud IP
(86) International application number: PCT/KR2024/021256
(87) International publication number: WO 2025/143859

(57) **Abstract**

A method by which a device performs wireless communication, and an apparatus for supporting same are provided. The apparatus can acquire configuration information related to subcarrier spacing, initiate a random access procedure, and transmit a third message in the random access procedure. For example, whether to permit an omission of the transmission of a first message and the reception of a second message in the random access procedure can be determined on the basis of the subcarrier spacing.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method may be provided. For example, the method may comprise: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

Based on an embodiment of the present disclosure, a non-transitory computer-readable storage medium storing instructions may be provided. For example, the instructions, when executed, may cause a device to perform operations comprising: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure provideable in a 6G system, based on an embodiment of the present disclosure.
FIG. 7 shows an example of a communication scenario based on a 6G system, based on an embodiment of the present disclosure.
FIG. 8 shows an uplink resource grid for narrow band Internet of Things (NB-IoT) based on an embodiment of the present disclosure.
FIG. 9 shows an example of OCC patterns applied to NPUSCH, based on an embodiment of the present disclosure.
FIG. 10 shows a method for a device to perform wireless communication, based on an embodiment of the present disclosure.
FIG. 11 shows a method for a base station to perform wireless communication, based on an embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

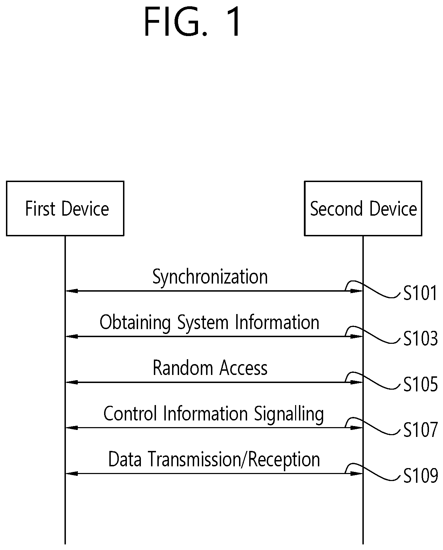

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

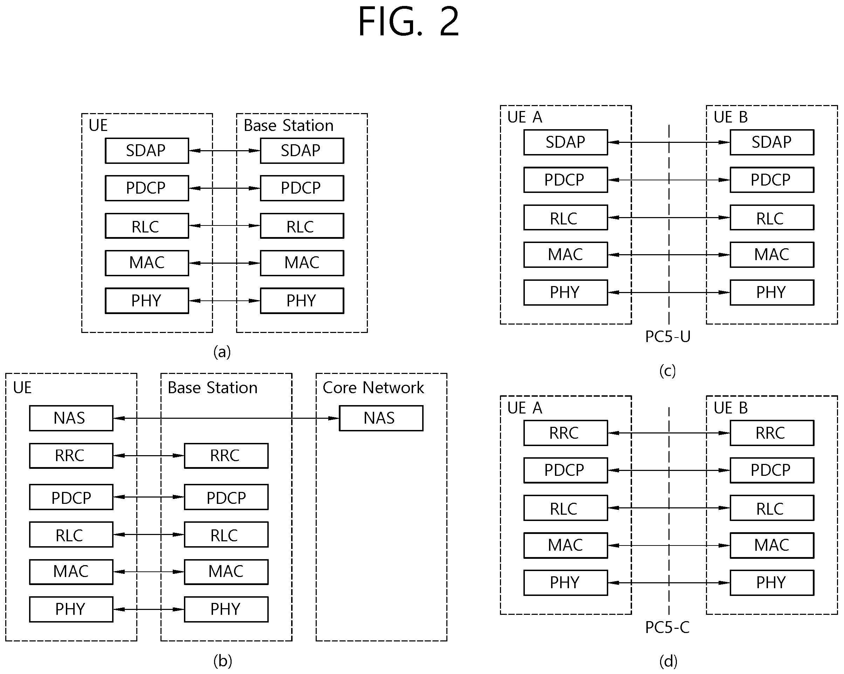

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, i.e., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

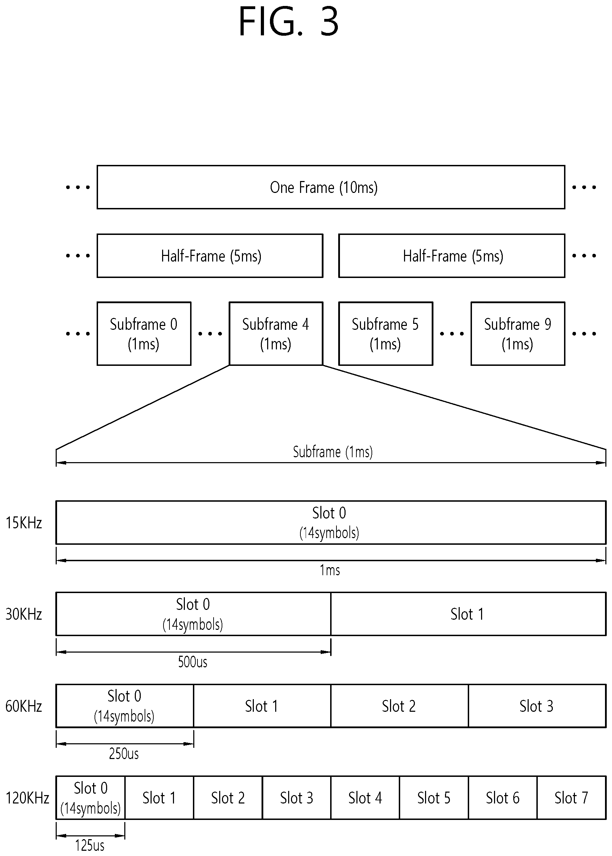

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

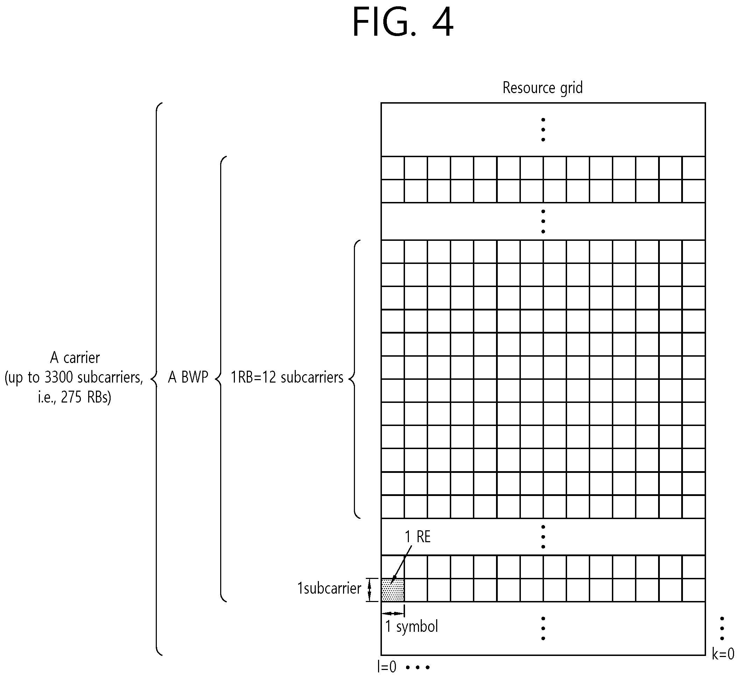

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

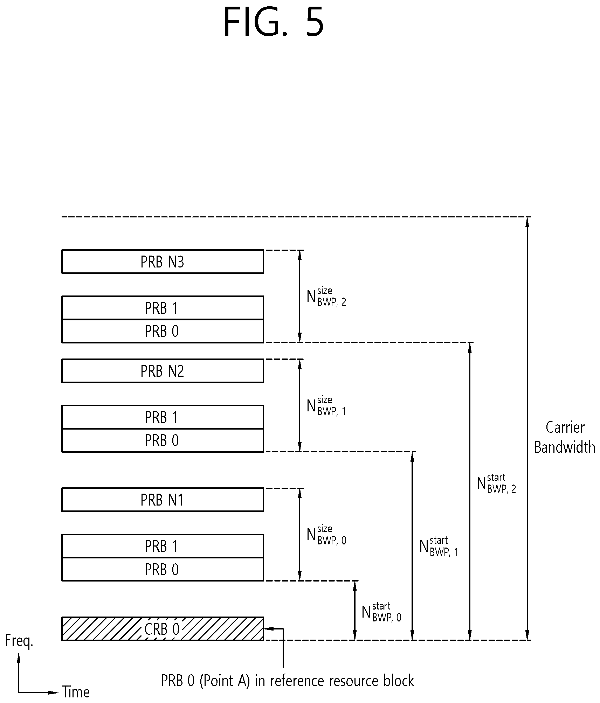

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

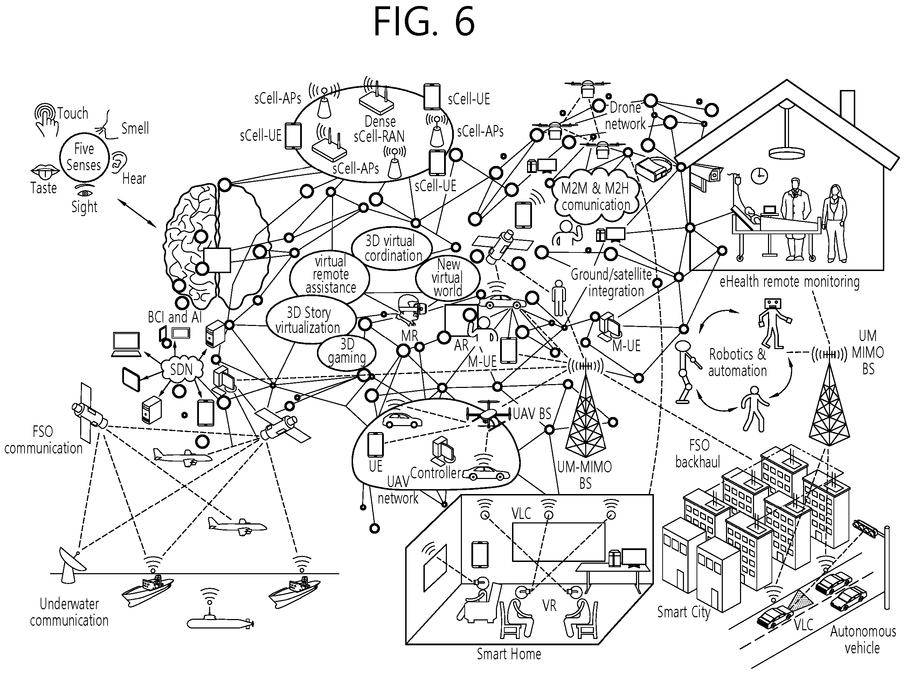

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

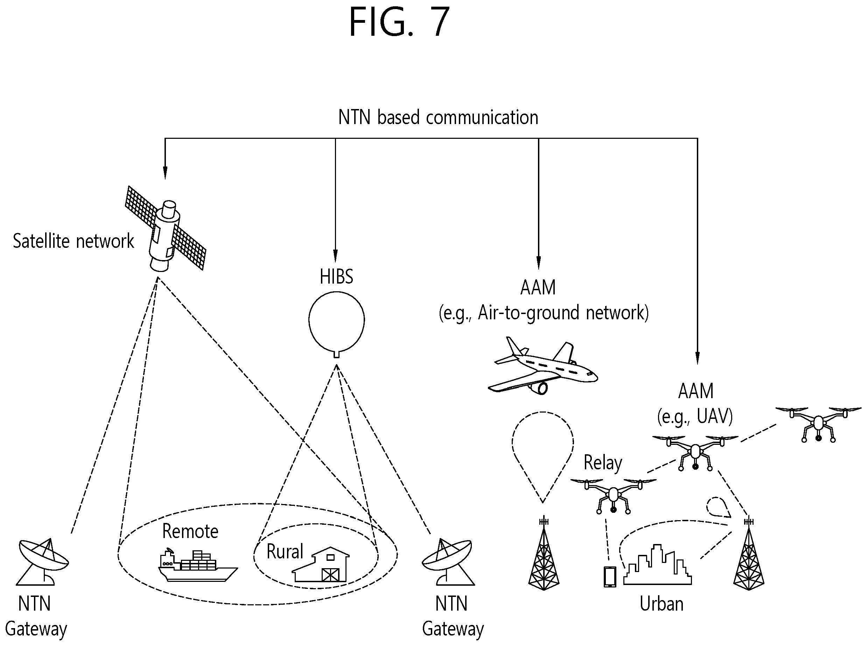

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

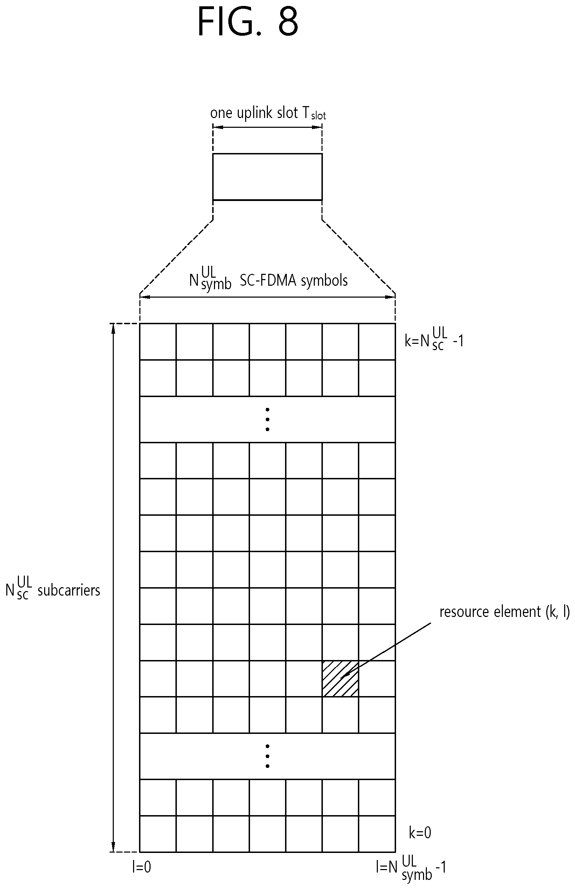

FIG. 8 shows an uplink resource grid for narrow band Internet of Things (NB-IoT) based on an embodiment of the present disclosure. The embodiment of FIG. 8 may be combined with various embodiments of the present disclosure.

For example, a physical channel (e.g., narrowband physical uplink shared channel (NPUSCH), narrowband physical random access channel (NPRACH)) or a signal (e.g., demodulation reference signal (DMRS)) may be transmitted based on one or several resource grids of N^{UL}_{sc} subcarriers and N^{UL}_{symb} SC-FDMA symbols. For example, the slot number within a radio frame may be denoted nₛ, where nₛ ∈ {0, 1, ..., 19} for △f=15kHz, and nₛ ∈ {0, 1, ..., 4} for △f=3.75kHz. For example, the uplink bandwidth in terms of subcarriers N^{UL}_{sc}, and the slot duration Tₛₗₒₜ may be defined as shown in Table 3.

**[Table 3]**

| Subcarrier spacing | N^{UL}_{sc} | Tₛₗₒₜ |
|---|---|---|
| Δf=3.75kHz | 48 | 61440·Tₛ |
| Δf=15kHz | 12 | 15360·Tₛ |

For example, each element in the resource grid may be referred to as a resource element and may be uniquely defined by the index pair (k, l) in a slot. Herein, k = 0, ..., N^{UL}_{sc}-1 and l = 0, ..., N^{UL}_{symb}-1 may be indices in the frequency and time domains, respectively. For example, resource element (k, l) may correspond to the complex value a_{k,l}.

For example, resource units may be used to describe the mapping of the NPUSCH to resource elements. For example, a resource unit may be defined as N^{UL}_{symb}N^{UL}ₛₗₒₜₛ SC-FDMA symbols in the time domain and N^{RU}_{sc} consecutive subcarriers in the frequency domain. Herein, for example, N^{RU}_{sc} and N^{UL}_{symb} may be given by Table 4 and Table 5 for frame structure types 1 and 2, respectively.

Table 4 shows examples of supported combinations of N^{RU}_{sc}, N^{UL}ₛₗₒₜₛ, and N^{UL}_{symb} for frame structure type 1.

**[Table 4]**

| NPUSCH format | Δf | N^{RU}_{sc} | N^{UL}ₛₗₒₜₛ | N^{UL}_{symb} |
|---|---|---|---|---|
| 1 | 3.75kHz | 1 | 16 | |
| | 15kHz | 1 | 16 | |
| | | 3 | 8 | |
| | | 6 | 4 | 7 |
| | | 12 | 2 | |
| 2 | 3.75kHz | 1 | 4 | |
| | 15kHz | 1 | 4 | |

Table 5 shows examples of supported combinations of N^{RU}_{sc}, N^{UL}ₛₗₒₜₛ, and N^{UL}_{symb} for frame structure type 2.

**[Table 5]**

| NPUSCH format | Δf | Supported UL-DL configurations | N^{RU}_{sc} | N^{UL}ₛₗₒₜₛ | N^{UL}_{symb} |
|---|---|---|---|---|---|
| 1 | 3.75kHz | 1, 4 | 1 | 16 | |
| | 15kHz | 1, 2, 3, 4, 5 | 1 | 16 | |
| | | | 3 | 8 | |
| | | | 6 | 4 | 7 |
| | | | 12 | 2 | |
| 2 | 3.75kHz | 1, 4 | 1 | 4 | |
| | 15kHz | 1,2,3,4,5 | 1 | 4 | |

For example, NPUSCH format 1 may be used to carry UL-SCH, and NPUSCH format 2 may be used to carry uplink control information.

For example, each NPUSCH codeword may be mapped to one or more than one resource units, N_{RU}, and each of which may be transmitted M^{NPUSCH}ᵣₑₚ times. For example, the mapping to resource elements (k, l) corresponding to the subcarriers assigned for transmission and not used for transmission of reference signals, may be in increasing order of first the index k, then the index l, starting with the first slot in the assigned resource unit. For example, after mapping to Nₛₗₒₜₛ slots, the Nₛₗₒₜₛ slots may be repeated M^{NPUSCH}_{identical}-1 additional times, before continuing the mapping of the block of complex-valued symbols to the following slot. Herein, for example, M^{NPUSCH}_{identical} and Nₛₗₒₜₛ may be obtained based on Equation 1. [Equation 1] $\begin{matrix}{M}_{identical}^{NPUSCH} = \left\{\begin{matrix}min \left(\left⌈{M}_{rep}^{NPUSCH}/2\right⌉, 4\right) & {N}_{sc}^{RU} > 1 \\ 1 & {N}_{sc}^{RU} = 1\end{matrix}\right. \\ {N}_{slots} = \left\{\begin{matrix}1 & Δf = 3.75 kHz \\ 2 & Δf = 15 kHz\end{matrix}\right.\end{matrix}$

Meanwhile, in a next-generation system, there is a need to increase multiplexing capacity between transmissions of an NB-IoT UE, and specifically, in the case of an IoT NTN system, the importance may be high. Meanwhile, there may be a need to support code-division multiplexing (CDM) between different NPUSCH DMRSs using the same time/frequency resource.

Meanwhile, since phase continuity may not be maintained between UL segments, applying a single orthogonal cover code (OCC) for different UL segments may significantly reduce orthogonality. Meanwhile, according to a UE transmission error, transmitting MSG3 directly without preamble transmission may cause inter-symbol interference due to a CP issue depending on SCS. Meanwhile, in the case of symbol-level OCC, there is a need for an OCC pattern to be different due to a difference in the number of data symbols between a slot including DMRS and a slot not including DMRS.

Combinations of various embodiments of the present disclosure may be applied differently for single-tone transmission and multi-tone transmission. For example, in the case of single-tone transmission, one subcarrier (e.g., 15kHz subcarrier or 3.75kHz subcarrier) may be used. For example, in the case of multi-tone transmission, a plurality of subcarriers (e.g., 3, 6, or 12 subcarriers) may be used.

Combinations of various embodiments of the present disclosure may be applied differently according to the number of subcarriers allocated for transmission.

Combinations of various embodiments of the present disclosure may be applied differently according to transmission contents of NPUSCH (e.g., SIB 1-NB, SIB, paging, random access procedure-related information, or other data).

In the embodiment(s) of the present disclosure, a multiplexing-related parameter for NPUSCH DMRS may be implicitly determined through a multiplexing-related parameter for NPUSCH data, and/or determination in an opposite direction may also be applied by extending from the proposal of the present disclosure.

Combinations of various embodiments of the present disclosure may be applied differently according to a payload type (e.g., regenerative or transparent payload) of a satellite.

Combinations of various embodiments of the present disclosure may be applied differently for each non-terrestrial network node type (e.g., geostationary earth orbit (GEO), non-geostationary earth orbit (NGEO), low earth orbit (LEO), medium earth orbit (MEO), high altitude platform station (HASP), drone) or altitude or fixed beam footprint or cell-moving beam footprint, etc.

Combinations of various embodiments of the present disclosure may be applied differently according to whether or not NB-IoT UL transmission occurs in a pre-configured UL resource.

Meanwhile, for NPUSCH transmission, an OCC in a time-axis and/or in a frequency-axis (e.g., subcarrier) may be applied to data symbols (excluding DMRS symbols).

For example, a unit for applying the OCC in the time-axis may be configured/designated and repeatedly applied for each transport block (TB) and/or for each repetition (repetition divided into Nᵣₑₚ) or a subset thereof and/or for each resource unit (RU) (RU divided into N_{RU}) or a subset thereof and/or for each unit (slot group divided into Nₛₗₒₜₛ) in which the same complex-valued symbols are mapped in NPUSCH mapping and/or for each UL segment.

For example, Nₛₗₒₜₛ may refer to the number of slots included in one resource unit, N_{RU} may refer to the number of resource units allocated for NPUSCH transmission, and Nᵣₑₚ may refer to the number of repetitions of NPUSCH transmission.

For example, an OCC index or an OCC sequence may be hopped (e.g., changed based on a specific reception or pattern) between the repetitions. For example, the hopping may be changed according to an NB-IoT cell ID and/or radio network temporary identifier (RNTI) value, etc.

Meanwhile, there is a need to align an OCC start/end application position even between NPUSCHs with different repetition values and/or k₀ (NPDCCH-to-NPUSCH timing) values and/or Nᵣₑₚ values.

For example, since the k₀ value is already in the form of a multiple of 2*N^{UL}ₛₗₒₜₛ value, it may be considered that there is no case where another NPUSCH transmission starts in the middle of a specific RU of NPUSCH.

For example, whether an OCC is enabled or disabled and/or an OCC length and/or a start position where an OCC is applied and/or a time and/or frequency domain where an OCC is applied and/or an OCC sequence index may be configured through RRC in a cell-specific manner and/or a UE-specific manner, and/or may be indicated through MAC CE, and/or may be indicated through DCI, and/or may be determined based on a resource of NPDCCH for a DCI format scheduling the NPUSCH (e.g., the lowest or the highest NCCE or NREG or PRB or subcarrier NPDCCH candidate index, aggregation level, number of repetitions).

For example, if OCC sequence application positions and sizes between different NPUSCH transmissions overlap differently (based on NPUSCH allocated resource and/or start position and/or UL segment and gap configuration, etc.), the UE may not expect that all or part of time and/or frequency resources of the NPUSCH transmission overlap.

For example, if at least the number of allocated subcarriers is 1, NPUSCH format 1 may have 16 N^{UL}ₛₗₒₜₛ for one RU, with a total of 16 DMRS symbols and 96 data symbols. In this case, since there is one allocated subcarrier, only the time-axis OCC may be applied.

For example, if an OCC is (repeatedly) applied within a repetition and/or within a subframe or a slot, a structure different from mapping of a legacy UE may be required, and thus it may not be CDM-ed with NPUSCH format 1 of the legacy UE.

For example, the UE may not expect to share the same time/frequency resource between NPUSCH format 1 (with 1 allocated subcarrier) where an OCC is enabled/applied and NPUSCH format 1 where an OCC is disabled/not applied.

For example, even in the case where the number of allocated subcarriers is 1, when the UE maps complex-valued symbols for NPUSCH to REs, a value of N^{NPUSCH}_{identical} may be greater than 1. For example, the value of N^{NPUSCH}_{identical} may be configured through RRC in a cell-specific manner and/or a UE-specific manner, and/or may be indicated through MAC CE, and/or may be indicated in DCI. For example, in the case of indicating in DCI, the value may be derived from N^{NPUSCH}ᵣₑₚ. That is, in the above case, even in the case where the number of subcarriers allocated for NPUSCH is 1, a part of complex-valued symbols may be mapped for a specific number of slots. Thereafter, this may be repeatedly mapped as much as the value of N^{NPUSCH}_{identical}, and mapping for residual complex-valued symbols may be continued from a next slot.

For example, in the case of 3.75kHz SCS, when applying an OCC between slots, a length of the OCC may be 4 or a divisor value thereof. For example, in the case of 3.75kHz SCS, when applying an OCC between subframes, a length of the OCC may be 2. A basis for this is that, in the case of 3.75kHz SCS, the UE transmits the NPUSCH only when a first set of Nₛₗₒₜₛ slots for the NPUSCH spans at least two consecutive UL subframes that do not overlap with an invalid UL subframe.

For example, in the case of 3.75kHz SCS, when applying an OCC between symbols, a length of the OCC may be 2. A basis for this is that a minimum value of the number of consecutive data symbols divided by DMRS symbols in a slot is 2. In the above case, the OCC having the length of 2 may be repeatedly applied in units of two data symbols.

For example, in the case of 3.75kHz SCS and/or 15kHz SCS, when applying an OCC between symbols, a length of the OCC may be 3. A basis for this is that, in the case of 15kHz SCS, a minimum value of the number of consecutive data symbols divided by DMRS symbols in a slot is 3. In the case of 3.75kHz SCS, the OCC having the length of 3 may be applied to three consecutive data symbols in a front part of a slot, and the OCC having the length of 3 may be applied to one data symbol and two data symbols before and after DMRS symbols, respectively, in a back part of the slot.

Meanwhile, in the case of NPUSCH transmission in non-terrestrial communication, after transmission and/or delay in a UL segment time unit of a length RRC-configured in a UE-specific manner, a UE-specific RRC-configured gap may be considered for NPUSCH resource mapping but actual transmission may not be performed.

For example, a gap may have a value of 1 symbol, 1 slot, and/or 1 subframe.

For example, a length of a segment may be a time length corresponding to 2, 4, 8, 16, 32, 64, 128, 256 RUs based on full-PRB allocation, and in the case of sub-PRB, they may be values obtained by dividing the above values by 2 and 4 for 6 SCs and 3 SCs, respectively.

For example, if an OCC application unit for the data symbols is for each symbol (group), the UE may not expect that the value of the gap is 1 symbol, and/or may expect that the value of the gap is 1 slot and/or 1 subframe.

For example, if an OCC application unit for the data symbols is for each slot (group), the UE may not expect that the value of the gap is 1 slot, and/or may expect that the value of the gap is 1 symbol and/or 1 subframe.

For example, if an OCC application unit for the data symbols is for each subframe (group), the UE may not expect that the value of the gap is 1 subframe and/or 1 slot, and/or may expect that the value of the gap is 1 symbol and/or 1 slot.

For example, OCC application may be applied to resources in a UL segment and/or resources where actual transmission occurs and/or resources excluding a gap.

For example, in the case where an OCC is applied in units of symbols (groups), and/or in the case of 3.75kHz SCS, the OCC having a length of 3 may be applied from a second symbol to a part including a gap before DMRS in a slot (within a UL segment). For example, if there is no gap, an OCC having a length of 4 or 2 may be applied from a first symbol.

For example, in the case where an OCC is applied in units of symbols (groups), and/or in the case of 15kHz SCS, the OCC having a length of 2 may be applied from a second symbol to a part including a gap before DMRS in a slot (within a UL segment). For example, if there is no gap, an OCC having a length of 3 or 2 may be applied from a first symbol.

In the embodiment(s) of the present disclosure, the OCC length may refer to (each of) a frequency-axis length and/or a time-axis length, and/or may refer to a total length of the frequency-axis and the time-axis.

For example, through a DCI format, an OCC (index) applied to NPUSCH scheduled by the DCI format may be indicated. For example, the OCC (index) may be limited to a frequency-axis OCC. For example, a field indicating allocated subcarriers in the DCI format may be used to indicate the allocated subcarriers and OCC information together.

For example, for legacy values (e.g., indices 0 to 18) indicated in the allocated subcarrier indication field, a first OCC (e.g., all ones) may be applied.

For example, information on allocated subcarriers to which other OCCs are applied may be indicated by using the current reserved state value(s) (e.g., all or a subset of the values with indices 19 to 63).

For example, a symbol group to which the same OCC is applied may be a symbol group to which the same data complex-valued symbols are mapped and/or a symbol group having the same redundancy version.

For example, the value may be changed so that the same redundancy version is applied to a symbol group to which the same OCC is applied.

For example, if an OCC is applied to NPUSCH, a value of B, which is the number of consecutive NB-IoT UL slots to which data complex-valued symbols for the same redundancy version are mapped for NPUSCH transmission, may be extended or increased. For example, the value of B may be in the form of multiplying an existing value of B by a specific scaling value (e.g., 2 or OCC length and/or a value configured through SIB/RRC).

For example, if an OCC is applied to NPUSCH, it may be allowed that a single redundancy version is used for NPUSCH transmission. For example, whether or not a single redundancy version is used for the single NPUSCH and the value thereof may be indicated in a DCI format, and/or may be configured by SIB/RRC.

In the embodiment(s) of the present disclosure, the symbol group may be configured with symbols that are actually consecutive in time, and/or may be configured with symbols that are actually discontinuous in time, or may be configured with slots that are actually consecutive in time, and/or may be configured with slots that are actually discontinuous in time.

For example, in the case of applying an OCC for (data REs of) NPUSCH, a transport block size (TBS) value may be a floor value and/or a ceiling value and/or a rounded value of a value obtained by dividing a TBS value determined when the OCC is not applied by a length of the OCC. A basis for this is that the number of repetitions of complex-valued symbols for REs may be determined by the length of the OCC. For example, if the length of the OCC is plural, a maximum value or a minimum value or an average value among OCC lengths may be used for transport block size (TBS) conversion.

For example, if the number of allocated subcarriers is 3 and an applied OCC length is 3, a TBS determination method for the NPUSCH may follow a TBS determination method for a case where the number of allocated subcarriers is 1.

For example, if the number of allocated subcarriers is 6 and an applied OCC length is 6, a TBS determination method for the NPUSCH may follow a TBS determination method for a case where the number of allocated subcarriers is 1.

For example, if the number of allocated subcarriers is 12 and an applied OCC length is 12, a TBS determination method for the NPUSCH may follow a TBS determination method for a case where the number of allocated subcarriers is 1.

For example, if the number of allocated subcarriers is 6 and an applied OCC length is 3, a TBS determination method for the NPUSCH may follow a TBS determination method for a case where the number of allocated subcarriers is 1.

For example, when interpreting a modulation and coding scheme (MCS) index in the above situation, it may be assumed as a case where the number of allocated subcarriers is 1.

For example, if an OCC is applied across a plurality of RUs, the number of resources of the plurality of RUs is converted to 1, and a TBS may be calculated based on an RU index corresponding to the reduced number of RUs.

In the embodiment(s) of the present disclosure, the OCC length may mean only a time-axis OCC length, and/or may mean only a frequency-axis OCC length, and/or may mean a product of the time-axis OCC length and the frequency-axis OCC length, i.e., a time-frequency axis OCC length.

Meanwhile, in the next-generation system, DMRS patterns for NPUSCH may be different according to slots, and also the number and/or presence of DMRS symbols may be different for each slot.

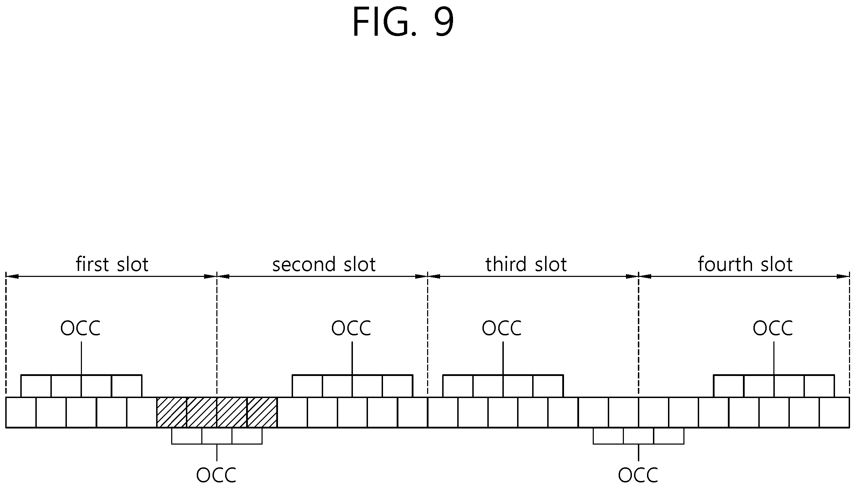

FIG. 9 shows an example of OCC patterns applied to NPUSCH, based on an embodiment of the present disclosure. The embodiment of FIG. 9 may be combined with various embodiments of the present disclosure.

For example, for a first slot, N (e.g., 2 or 3) symbols among 7 symbols may be DMRS symbols, and/or for a second slot, M (e.g., 2 or 3) symbols among 7 symbols may be DMRS symbols, and/or for a third slot, there may be no DMRS symbol among 7 symbols, and/or for a fourth slot, there may be no DMRS symbol among 7 symbols. In the embodiment of FIG. 9, for convenience of description, a case where DMRS symbols are mapped to symbol indices 5 and 6 in the first slot and DMRS symbols are mapped to symbol indices 0 and 1 in the second slot is described.

For example, OCC patterns applied for the first slot and the third slot may be the same. For example, OCC patterns applied for the second slot and the fourth slot may be the same. For example, OCC patterns applied for the first slot and the second slot may be the same as OCC patterns applied for the third slot and the fourth slot.

For example, for the first slot and the second slot, an OCC (having a length of 5) may be applied to symbol indices 0, 1, 2, 3, and 4 of the first slot, and/or an OCC (having a length of 4) may be applied to symbol indices 5 and 6 of the first slot and symbol indices 0 and 1 of the second slot, and/or an OCC (having a length of 5) may be applied to symbol indices 2, 3, 4, 5, and 6 of the second slot. For example, symbols to which the OCC having the length of 4 is applied may be DMRS symbols.

For example, OCC patterns applied for the third slot and the fourth slot may be the same as OCC patterns applied for the first slot and the second slot, and symbols to which the OCC having a length of 4 is applied may be data symbols (this time) rather than DMRS symbols. An advantage for this is that the types of OCCs can be limited to a small number and a maximum length of the OCC can be limited.

For example, OCC patterns applied for the first slot and the third slot may be different. For example, OCC patterns applied for the second slot and the fourth slot may be different. For example, OCC patterns applied for the first slot and the second slot may be different from OCC patterns applied for the third slot and the fourth slot.

For example, OCC patterns applied for the third slot and the fourth slot may be the same. For example, for the third slot (and/or the fourth slot), an OCC (having a length of 7) may be applied to symbol indices 0, 1, 2, 3, 4, 5, and 6 of the third slot (and/or the fourth slot).

In the embodiment(s) of the present disclosure, the DMRS symbol may be a symbol in which an actual DMRS is transmitted, or may be a symbol in which a DMRS can be transmitted or a symbol to which data is not mapped.

Meanwhile, for the purpose of early data transmission (EDT), communication may be performed between a base station (e.g., eNB) and a UE starting with MSG3 transmission without MSG1/MSG2. Meanwhile, in the case of a NTN communication method, due to a UE location error (based on global navigation satellite systems (GNSS), etc.) and/or a location information error of an NTN node, time/frequency offset pre-compensation based on ephemeris information and/or location information of the NTN node and location information of the UE may not be accurate, and if correction through a timing advance (TA) command is not performed, UL reception at the base station end may not be accurate.

For example, in the case of an initial access procedure through MSG3 transmission initially without MSG1/MSG2 transmission, a UL subcarrier spacing for the MSG3 may be limited to 3.75kHz. A basis for this is that there is room to overcome a timing error according to the location information error by a relatively long CP. Herein, for example, MSG1 may refer to a physical random access channel (e.g., narrowband physical random access channel, random access preamble, etc.), MSG2 may refer to a random access response (e.g., narrowband random access response, grant), and MSG3 may refer to a physical uplink shared channel (e.g., narrowband physical uplink shared channel). For example, whether or not omission of MSG1/MSG2 transmission/reception is allowed in the initial access procedure (e.g., random access procedure) may be based on the subcarrier spacing. For example, based on that the subcarrier spacing is 3.75kHz, omission of MSG1/MSG2 transmission/reception in the initial access procedure (e.g., random access procedure) may be allowed. For example, based on that the subcarrier spacing is not 3.75kHz, omission of MSG1/MSG2 transmission/reception in the initial access procedure (e.g., random access procedure) may not be allowed.

For example, in the case of the initial access procedure through MSG3 transmission initially without MSG1/MSG2 transmission, a symbol structure configuring a slot and/or a CP length for the MSG3 may be different from those for other UL transmissions. For example, UL of NB-IoT for the MSG3 may use an extended CP, and/or the length thereof may be 512*Tₛ (herein Tₛ is 1/15000/2048), and/or the number of symbols configuring the slot may be 6. On the other hand, for all or part of other UL transmissions, a normal CP (160*Tₛ or 144*Tₛ) may be used, and the number of symbols configuring the slot may be 7. For example, the length of the extended CP may be 256*Tₛ.

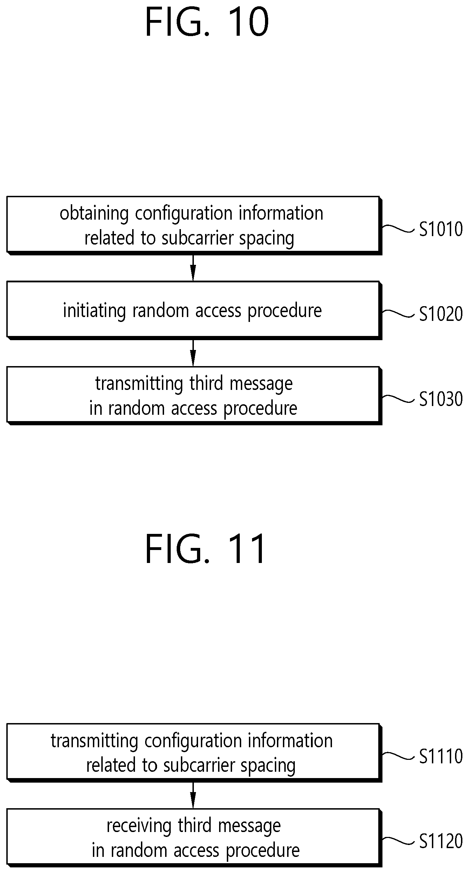

FIG. 10 shows a method for a device to perform wireless communication, based on an embodiment of the present disclosure. The embodiment of FIG. 10 may be combined with various embodiments of the present disclosure.

Referring to FIG. 10, in step S1010, the device may obtain configuration information related to subcarrier spacing. In step S1020, the device may initiate a random access procedure. In step S1030, the device may transmit a third message in the random access procedure. For example, whether omission of transmission of a first message and reception of a second message in the random access procedure is allowed may be based on the subcarrier spacing.

For example, the third message may be transmitted based on a narrowband-related physical uplink shared channel. For example, an orthogonal cover code for the narrowband-related physical uplink shared channel may be applied within an uplink segment. For example, based on that an orthogonal cover code is applied to the narrowband-related physical uplink shared channel, use of a single redundancy version for transmission of the narrowband-related physical uplink shared channel may be allowed. For example, whether the single redundancy version is used for transmission of the narrowband-related physical uplink shared channel may be configured based on at least one of downlink control information, a system information block, or radio resource control (RRC). For example, a reference signal pattern for the narrowband-related physical uplink shared channel may be different for each slot. For example, an orthogonal cover code pattern applied to a slot to which a reference signal is mapped and an orthogonal cover code pattern applied to a slot to which a reference signal is not mapped may be the same. For example, the reference signal may be a demodulation reference signal (DMRS).

For example, the first message may be a narrowband-related physical random access channel, and the second message may be a narrowband-related random access response including a grant.

For example, based on that the subcarrier spacing is 3.75kHz, omission of transmission of the first message and reception of the second message in the random access procedure may be allowed.

For example, based on that the subcarrier spacing is not 3.75kHz, omission of transmission of the first message and reception of the second message in the random access procedure may not be allowed.

For example, transmission of the third message may be performed based on an extended cyclic prefix, and transmission other than the third message may be performed based on a normal cyclic prefix.

For example, transmission of the third message may be performed based on a slot including 6 symbols, and transmission other than the third message may be performed based on a slot including 7 symbols.

The proposed method can be applied to devices based on various embodiments of the present disclosure. First, the processor 102 of the device 100 may obtain configuration information related to subcarrier spacing. In addition, the processor 102 of the device 100 may initiate a random access procedure. In addition, the processor 102 of the device 100 may control the transceiver 106 to transmit a third message in the random access procedure. For example, whether omission of transmission of a first message and reception of a second message in the random access procedure is allowed may be based on the subcarrier spacing.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

Based on an embodiment of the present disclosure, a non-transitory computer-readable storage medium storing instructions may be provided. For example, the instructions, when executed, may cause a device to perform operations comprising: obtaining configuration information related to subcarrier spacing; initiating a random access procedure; and transmitting a third message in the random access procedure. For example, whether omission of transmission of a first message and reception of a second message in the random access procedure is allowed may be based on the subcarrier spacing.

FIG. 11 shows a method for a base station to perform wireless communication, based on an embodiment of the present disclosure. The embodiment of FIG. 11 may be combined with various embodiments of the present disclosure.

Referring to FIG. 11, in step S1110, the base station may transmit configuration information related to subcarrier spacing. In step S1120, the base station may receive a third message in a random access procedure. For example, whether omission of reception of a first message and transmission of a second message in the random access procedure is allowed may be based on the subcarrier spacing.

For example, the third message may be received based on a narrowband-related physical uplink shared channel. For example, an orthogonal cover code for the narrowband-related physical uplink shared channel may be applied within an uplink segment. For example, based on that an orthogonal cover code is applied to the narrowband-related physical uplink shared channel, use of a single redundancy version for reception of the narrowband-related physical uplink shared channel may be allowed. For example, whether the single redundancy version is used for reception of the narrowband-related physical uplink shared channel may be configured based on at least one of downlink control information, a system information block, or radio resource control (RRC). For example, a reference signal pattern for the narrowband-related physical uplink shared channel may be different for each slot. For example, an orthogonal cover code pattern applied to a slot to which a reference signal is mapped and an orthogonal cover code pattern applied to a slot to which a reference signal is not mapped may be the same. For example, the reference signal may be a demodulation reference signal (DMRS).

For example, the first message may be a narrowband-related physical random access channel, and the second message may be a narrowband-related random access response including a grant.

For example, based on that the subcarrier spacing is 3.75kHz, omission of reception of the first message and transmission of the second message in the random access procedure may be allowed.

For example, based on that the subcarrier spacing is not 3.75kHz, omission of reception of the first message and transmission of the second message in the random access procedure may not be allowed.

For example, reception of the third message may be performed based on an extended cyclic prefix, and reception other than the third message may be performed based on a normal cyclic prefix.

For example, reception of the third message may be performed based on a slot including 6 symbols, and reception other than the third message may be performed based on a slot including 7 symbols.

The proposed method can be applied to devices based on various embodiments of the present disclosure. First, the processor 202 of the base station 200 may control the transceiver 206 to transmit configuration information related to subcarrier spacing. In addition, the processor 202 of the base station 200 may control the transceiver 206 to receive a third message in a random access procedure. For example, whether omission of reception of a first message and transmission of a second message in the random access procedure is allowed may be based on the subcarrier spacing.

Based on an embodiment of the present disclosure, a base station may be provided. For example, the base station may comprise: at least one transceiver; at least one processor; and at least one memory connected to the at least one processor and storing instructions. For example, the instructions, based on being executed by the at least one processor, may cause the base station to perform operations comprising: transmitting configuration information related to subcarrier spacing; and receiving a third message in a random access procedure. For example, whether omission of reception of a first message and transmission of a second message in the random access procedure is allowed may be based on the subcarrier spacing.

Based on an embodiment of the present disclosure, a processing device adapted to control a base station may be provided. For example, the processing device may comprise: at least one processor; and at least one memory connected to the at least one processor and storing instructions. For example, the instructions, based on being executed by the at least one processor, may cause the base station to perform operations comprising: transmitting configuration information related to subcarrier spacing; and receiving a third message in a random access procedure. For example, whether omission of reception of a first message and transmission of a second message in the random access procedure is allowed may be based on the subcarrier spacing.

Based on an embodiment of the present disclosure, a non-transitory computer-readable storage medium storing instructions. For example, the instructions, when executed, may cause a base station to perform operations comprising: transmitting configuration information related to subcarrier spacing; and receiving a third message in a random access procedure. For example, whether omission of reception of a first message and transmission of a second message in the random access procedure is allowed may be based on the subcarrier spacing.

Based on various embodiments of the present disclosure, since the OCC for the NPUSCH may be applied within the same UL segment, the orthogonality between the NPUSCHs to which the OCC is applied can be guaranteed above a certain level even when a plurality of UL segments exist. By the SCS for the transmission and reception of the MSG without a preamble being limited to 3.75 kHz, the MSG3 can be transmitted to be robust against the UE transmission timing error. Furthermore, by matching the OCC pattern identically for slots with and without DMRS, the OCC can be used efficiently regardless of DMRS.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

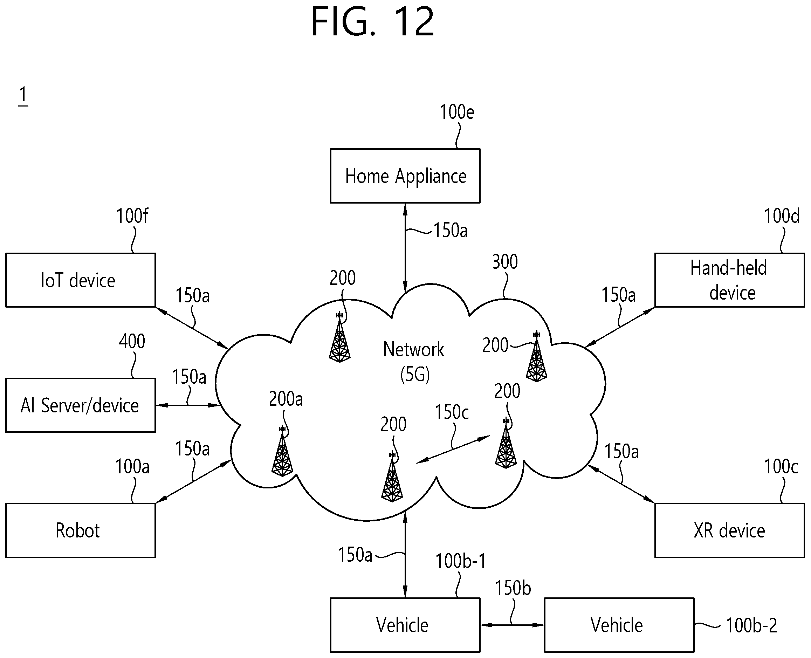

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

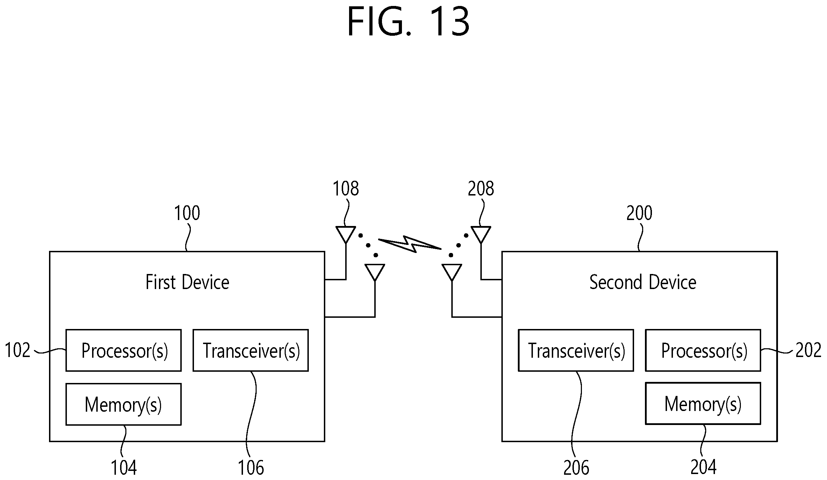

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

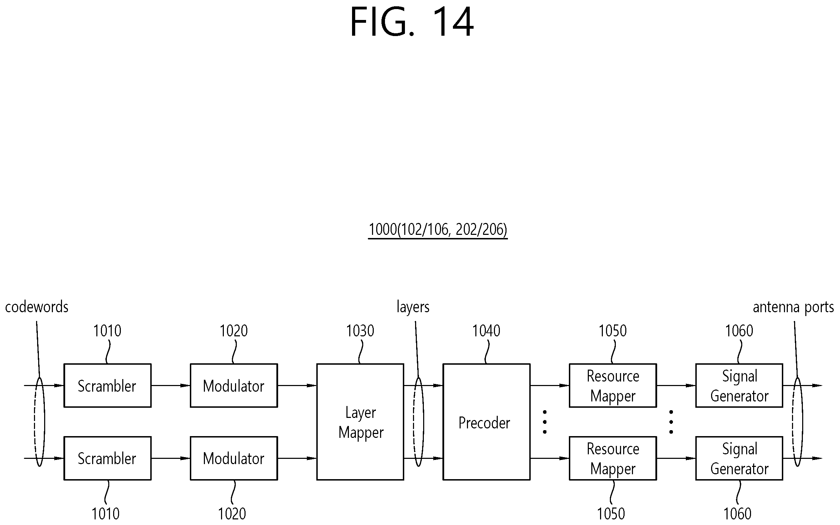

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

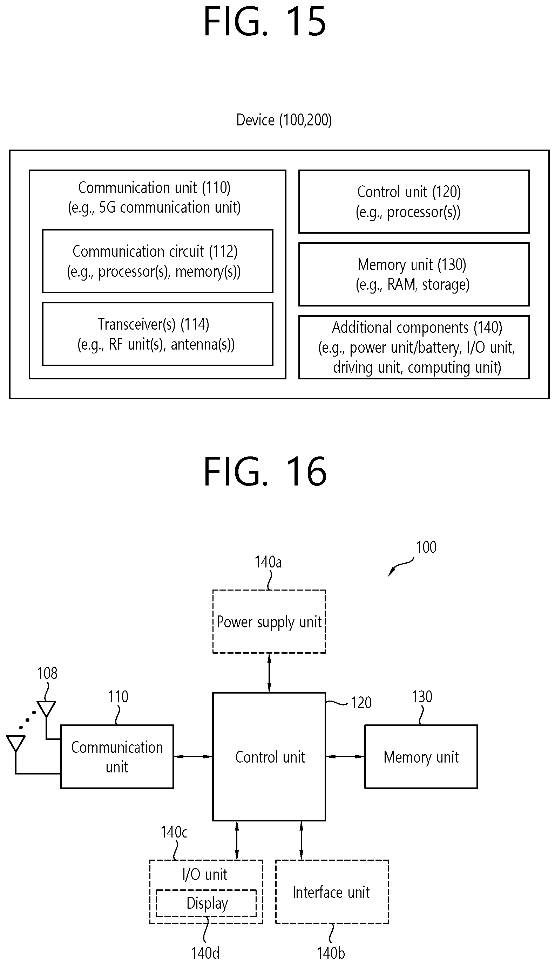

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

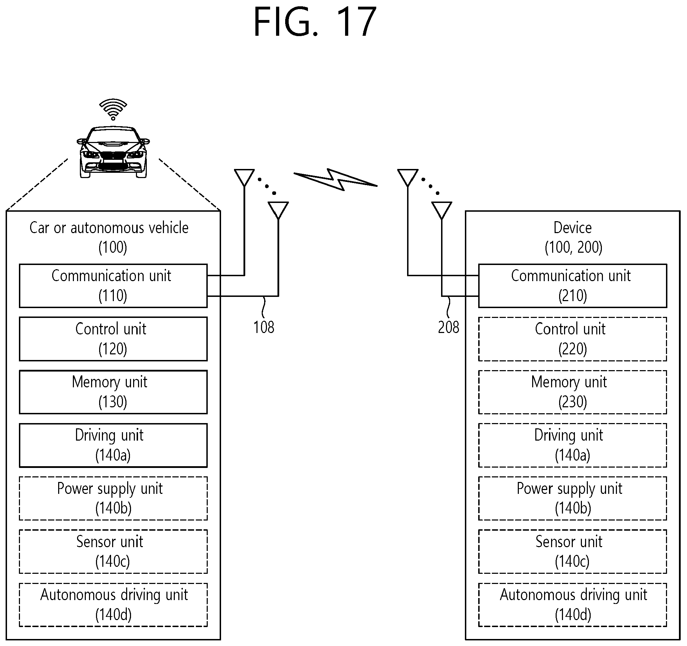

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining configuration information related to subcarrier spacing;
initiating a random access procedure; and
transmitting a third message in the random access procedure,
wherein whether omission of transmission of a first message and reception of a second message in the random access procedure is allowed is based on the subcarrier spacing.

2. The method of claim 1, wherein the third message is transmitted based on a narrowband-related physical uplink shared channel.

3. The method of claim 2, wherein an orthogonal cover code for the narrowband-related physical uplink shared channel is applied within an uplink segment.

4. The method of claim 2, wherein, based on that an orthogonal cover code is applied to the narrowband-related physical uplink shared channel, use of a single redundancy version for transmission of the narrowband-related physical uplink shared channel is allowed.

5. The method of claim 4, wherein whether the single redundancy version is used for transmission of the narrowband-related physical uplink shared channel is configured based on at least one of downlink control information, a system information block, or radio resource control (RRC).

6. The method of claim 2, wherein a reference signal pattern for the narrowband-related physical uplink shared channel is different for each slot.

7. The method of claim 6, wherein an orthogonal cover code pattern applied to a slot to which a reference signal is mapped and an orthogonal cover code pattern applied to a slot to which a reference signal is not mapped are the same.

8. The method of claim 7, wherein the reference signal is a demodulation reference signal (DMRS).

9. The method of claim 1, wherein the first message is a narrowband-related physical random access channel, and the second message is a narrowband-related random access response including a grant.

10. The method of claim 1, wherein, based on that the subcarrier spacing is 3.75kHz, omission of transmission of the first message and reception of the second message in the random access procedure is allowed.

11. The method of claim 1, wherein, based on that the subcarrier spacing is not 3.75kHz, omission of transmission of the first message and reception of the second message in the random access procedure is not allowed.

12. The method of claim 1, wherein transmission of the third message is performed based on an extended cyclic prefix, and transmission other than the third message is performed based on a normal cyclic prefix.

13. The method of claim 1, wherein transmission of the third message is performed based on a slot including 6 symbols, and transmission other than the third message is performed based on a slot including 7 symbols.

14. A device, comprising:
at least one transceiver;
at least one processor; and
at least one memory connected to the at least one processor and storing instructions that, based on being executed by the at least one processor, cause the device to perform operations comprising:
obtaining configuration information related to subcarrier spacing;
initiating a random access procedure; and
transmitting a third message in the random access procedure,
wherein whether omission of transmission of a first message and reception of a second message in the random access procedure is allowed is based on the subcarrier spacing.

15. A processing device adapted to control a device, the processing device comprising:
at least one processor; and
at least one memory connected to the at least one processor and storing instructions that, based on being executed by the at least one processor, cause the device to perform operations comprising:
obtaining configuration information related to subcarrier spacing;
initiating a random access procedure; and
transmitting a third message in the random access procedure,
wherein whether omission of transmission of a first message and reception of a second message in the random access procedure is allowed is based on the subcarrier spacing.

16. A non-transitory computer-readable storage medium storing instructions that, when executed, cause a device to perform operations comprising:
obtaining configuration information related to subcarrier spacing;
initiating a random access procedure; and
transmitting a third message in the random access procedure,
wherein whether omission of transmission of a first message and reception of a second message in the random access procedure is allowed is based on the subcarrier spacing.

17. A method, comprising:
transmitting configuration information related to subcarrier spacing; and
receiving a third message in a random access procedure,
wherein whether omission of reception of a first message and transmission of a second message in the random access procedure is allowed is based on the subcarrier spacing.

18. A base station, comprising:
at least one transceiver;
at least one processor; and
at least one memory connected to the at least one processor and storing instructions that, based on being executed by the at least one processor, cause the base station to perform operations comprising:
transmitting configuration information related to subcarrier spacing; and
receiving a third message in a random access procedure,
wherein whether omission of reception of a first message and transmission of a second message in the random access procedure is allowed is based on the subcarrier spacing.

19. A processing device adapted to control a base station, the processing device comprising:
at least one processor; and
at least one memory connected to the at least one processor and storing instructions that, based on being executed by the at least one processor, cause the base station to perform operations comprising:
transmitting configuration information related to subcarrier spacing; and
receiving a third message in a random access procedure,
wherein whether omission of reception of a first message and transmission of a second message in the random access procedure is allowed is based on the subcarrier spacing.

20. A non-transitory computer-readable storage medium storing instructions that, when executed, cause a base station to perform operations comprising:
transmitting configuration information related to subcarrier spacing; and
receiving a third message in a random access procedure,
wherein whether omission of reception of a first message and transmission of a second message in the random access procedure is allowed is based on the subcarrier spacing.
